# EUROPÄISCHE PATENTANMELDUNG

(11) **EP 4 361 664 A1**
(43) Veröffentlichungstag der Anmeldung: **01.05.2024**
(21) Anmeldenummer: 23187497.5
(22) Anmeldetag: 25.07.2023
(51) Int. Cl.: G01S 7/03, G01S 13/04, G01S 13/06, G01S 13/931, H01Q 1/32

(54) **RADARSENSORSYSTEM MIT ALTERNIEREND GESCHALTETEN ANTENNENANORDNUNGEN, ENTSPRECHENDES RADARSENSORSYSTEMMODUL UND KRAFTFAHRZEUG**

(30) Priorität: 26.10.2022 DE 102022128406
(71) Anmelder: HUF Hülsbeck & Fürst GmbH & Co. KG, 42551 Velbert (DE)
(72) Erfinder: Schindler, Mirko, 42549 Velbert (DE); Wehner, Philipp, 45879 Gelsenkirchen (DE); Leib, Steffen, 40885 Ratingen (DE)
(74) Vertreter: Zenz Patentanwälte Partnerschaft mbB

(57) **Zusammenfassung**

Die Erfindung betrifft ein Radarsensorsystem (1) zur Erkennung von Objekten. Dieses weist auf:
ein Antennensystem (2) mit einer ersten Antennenanordnung (3) mit mindestens einer ersten Sendeantenne (4) und mindestens einer ersten Empfangsantenne (5), die einen ersten Radarerfassungsbereich (16) abdeckt, mit einer zweiten Antennenanordnung (6) mit mindestens einer zweiten Sendeantenne (7) und mindestens einer zweiten Empfangsantenne (8), die einen zweiten Radarerfassungsbereich (17) abdeckt. Außerdem weist es eine Steueranordnung (9) mit einem Sende-und Empfangsschaltsystem (10, 10') und einem Mikrocontroller (11) auf. In manchen Ausführungen ist auch ein Antennenumschalter (12) vorhanden.

Die Erfindung betrifft außerdem ein Radarsensorsystemmodul und ein Kraftfahrzeug.

## Beschreibung

Die Erfindung betrifft ein Radarsensorsystem zur Erkennung von Objekten. Ferner ist ein Radarsensorsystemmodul beschrieben. Die Erfindung bezieht sich außerdem auf ein Kraftfahrzeug, das ein Radarsensorsystem aufweist.

Die Radartechnologie ist seit dem frühen 20. Jahrhundert bekannt. Sie beruht auf dem Prinzip, elektromagnetische Wellen auszusenden, das Echo der ausgesendeten elektromagnetischen Wellen zu empfangen, und das empfangene Signal bedarfsweise nach verschiedenen Kriterien auszuwerten. Je nach bedarfsweiser konkreter Umsetzung können verschiedene Informationen über die Objekte gewonnen werden, welche für das Zurückwerfen des Echos ursächlich sind. Beispielsweise kann mit der Radartechnologie eine Ortung erfolgen. Weiterhin können Informationen über die Relativbewegung zwischen Sender und Objekt, über die absolute Geschwindigkeit eines der beiden oder, je nach Ausführung, über Konturen des Objekts gewonnen werden.

In der Automobiltechnologie gewinnt die Nutzung von Radar zunehmend an Bedeutung. Ein Hintergrund hierfür ist der Wunsch, die Autonomie von Fahrzeugen zu erhöhen, wodurch die Weiterentwicklung der in Fahrzeugen genutzten Sensoren getrieben wurde.

Inzwischen werden Radarsensoranordnungen zur Ausrüstung beispielsweise von Fahrzeugen als zum Einbau bereite Zukaufsysteme angeboten, die ein hohes Maß an Reichweite sowie lateraler Auflösung in der Objekterkennung bereitstellen.

Aus verschiedenen Gründen, nicht zuletzt regulatorischer Art, können diese beispielsweise im Frequenzbereich zwischen 24 GHz und 81 GHz betrieben werden, wobei im Bereich zwischen 77 GHz und 81 GHz betriebene Radarsensoren eine häufig genutzte Variante sind. Die genannten Frequenzbereiche werden aufgrund der Wellenlänge der ausgesandten elektromagnetischen Wellen im englischen gelegentlich auch als *mmWave* referenziert.

Die Nutzung von Radarsensoren hat den Vorteil, dass aufgrund des grundsätzlichen Funktionsprinzips, ein Echo elektromagnetischer Wellen zur Informationsgewinnung zu nutzen, Informationen erhalten werden können, die über die Ergebnisse hinausgehen, die mit Ultraschallsensoren gewonnen werden können; gegenüber der Nutzung von Lidarsystemen wiederum haben Radarsensoren den Vorteil, dass die Beschaffung von Radarsensoren mit geringeren Kosten einhergeht.

Es ist das Bestreben da, den Nutzen der Radarsysteme zu erhöhen, und beispielsweise für die Nutzung in marktverfügbaren Fahrzeugen zu verbessern. Vor diesem Hintergrund wird gewünscht, Sensoren für eine große Zahl unterschiedlicher Detektionsszenarien vorzubereiten, ohne allerdings die Anforderungen an den Gesamtenergiebedarf einer Gesamtheit von Komponenten, beispielsweise bei Fahrzeugen aller am Fahrzeug verbauten Komponenten, aus dem Blick zu verlieren.

Aufgabe der Erfindung ist es daher, eine verbesserte Nutzbarkeit von Sensoren zu ermöglichen, die auf Basis von Radartechnologie Daten gewinnen.

Die Aufgabe wird mit einem Radarsensorsystem mit den Merkmalen des Anspruchs 1, mit einem Radarsensorsystemmodul mit den Merkmalen des Anspruchs 7 sowie mit einem Kraftfahrzeug mit den Merkmalen des Anspruchs 8 gelöst.

Das erfindungsgemäße Radarsensorsystem dient der Erkennung von Objekten.

Das Radarsensorsystem weist zu diesem Zweck ein Antennensystem auf. Das Antennensystem wiederum weist zumindest auf:
- Eine erste Antennenanordnung mit mindestens einer ersten Sendeantenne und mindestens einer ersten Empfangsantenne, die einen ersten Radarerfassungsbereich abdeckt; sowie
- eine zweite Antennenanordnung mit mindestens einer zweiten Sendeantenne und mindestens einer zweiten Empfangsantenne, die einen zweiten Radarerfassungsbereich abdeckt.

Die erste Antennenanordnung und die zweite Antennenanordnung sind bevorzugt in festgelegter Position zueinander positioniert, so dass der erste Radarerfassungsbereich und der zweite Radarerfassungsbereich entweder nicht überlappen oder nur teilweise überlappen. Insbesondere sind der erste Radarerfassungsbereich und der zweite Radarerfassungsbereich nicht deckungsgleich, bevorzugt weist jeder der beiden einen Erfassungsbereich auf, der von dem anderen der beiden nicht abgedeckt wird. Besonders bevorzugt ist, dass der erste Radarerfassungsbereich und der zweite Radarerfassungsbereich sich teilweise überlappen, so dass der erste Radarerfassungsbereich und der zweite Radarerfassungsbereich zusammengenommen sich ergänzend einen Gesamtradarerfassungsbereich abdecken. Jeder der genannten Radarerfassungsbereiche bemisst sich in seiner Form entsprechend der Abstrahl- und Empfangscharakteristik der ersten Antennenanordnung beziehungsweise der zweiten Antennenanordnung, die durch die Strahlungscharakteristika der entsprechenden Antenne bestimmt wird. Mit dem Radarerfassungsbereich ist somit also das gemeint, was sich aus der Position der Antennenanordnung und der Antennencharakteristika der Antennen der Antennenanordnung ergibt. Die Maßgabe, gemäß welcher die erste Antennenanordnung und die zweite Antennenanordnung in festgelegter Position zueinander positioniert sind, ist dahingehend zu verstehen, dass die erste Antennenanordnung und die zweite Antennenanordnung durch mechanische Verbindungsmittel mittelbar miteinander feststehend oder beweglich verbunden sind. Beispielsweise können beide Antennenanordnungen, die erste Antennenanordnung und die zweite Antennenanordnung, an einer selben Fahrzeugtür angeordnet sein und dadurch unbeweglich zueinander jeweils eine feststehende Abstrahlcharakteristik aufweisen, wobei die Positionierung derart gewählt ist, dass der erste Radarerfassungsbereich und der zweite Radarerfassungsbereich nicht oder nur teilweise überlappen. Es kann aber auch vorgesehen sein, dass die Positionierung festgelegt ist, aber beweglich ist, beispielsweise kann die erste Antennenanordnung schwenkbar zu der zweiten Antennenanordnung positioniert sein, beispielsweise, wenn die erste Antennenanordnung an einer Fahrzeugtür und die zweite Antennenanordnung an einem Kotflügel angeordnet ist. Die Maßgabe, dass der erste Radarerfassungsbereich und der zweite Radarerfassungsbereich nicht oder nur teilweise überlappen kann insbesondere dahingehend zu verstehen sein, dass dies zumindest für eine mögliche Stellung der ersten Antennenanordnung zu der zweiten Antennenanordnung gilt, bevorzugt für alle möglichen Stellungen der ersten Antennenanordnung zu der zweiten Antennenanordnung; besonders bevorzugt ist dies aber derart zu verstehen, dass der erste Radarerfassungsbereich und der zweite Radarerfassungsbereich nicht oder nur teilweise überlappen zumindest in solchen Fällen, in denen ein Grundzustand des Radarsensorsystems vorliegt, beispielsweise bei dem Beispiel eines Fahrzeugs, das dadurch gekennzeichnet ist, dass ein Fahrzeug, an dem das Radarsensorsystem angeordnet ist, komplett geschlossen ist, also es insbesondere keine geöffneten Türen oder Klappen aufweist.

Die wesentliche Mindestanforderung der zueinander zu wählenden Relativpositionierung von erstem Radarerfassungsbereich und zweitem Radarerfassungsbereich ist diejenige, dass der erste Radarerfassungsbereich und der zweite Radarerfassungsbereich nicht deckungsgleich sind. Durch diese Vorgabe wird in vorteilhafter Weise erreicht, dass der erste Radarerfassungsbereich und der zweite Radarerfassungsbereich zueinander komplementäre Bereiche sind, sodass die erste Antennenanordnung und die zweite Antennenanordnung zueinander komplementäre Radarantworten herbeiführen und empfangen können.

Mit dem Antennensystem ist eine Steueranordnung gekoppelt. Die Steueranordnung ist eine Einrichtung oder eine Gesamtheit von Einrichtungen, die eingerichtet ist, das Antennensystem zu steuern. Die Steueranordnung weist zumindest ein Sende- und Empfangsschaltsystem und einen Mikrocontroller auf. Der Mikrocontroller ist eingerichtet, also insbesondere entsprechend programmiert, eine alternierende Ansteuerung der ersten Antennenanordnung und der zweiten Antennenanordnung des Antennensystems vorzunehmen.

Der Mikrocontroller ist also in der Lage, jede der vorhandenen Antennenanordnungen, also zumindest die erste Antennenanordnung und die zweite Antennenanordnung, separat voneinander anzusprechen. Darüber hinaus ist er außerdem eingerichtet, jede dieser Antennenanordnungen zu verschiedenen Zeitpunkten anzusteuern. Das bedeutet, dass der Mikrocontroller in manchen Zeiträumen die erste Antennenanordnung ansteuert und in manchen Zeiträumen die zweite Antennenanordnung ansteuert. Die alternierende Ansteuerung der ersten Antennenanordnung und der zweiten Antennenanordnung bedeutet insbesondere, dass das Ansteuern der ersten Antennenanordnung und der zweiten Antennenanordnung in irgendeiner Art und Weise hin und her abwechseln, bevorzugt in der Reihenfolge A-B-A-B-A-B- usw., wenn A die erste Antennenanordnung bezeichnet und B die zweite Antennenanordnung bezeichnet.

Die Ansteuerung der ersten Antennenanordnung und die Ansteuerung der zweiten Antennenanordnung betrifft das alternierende Senden und das alternierende Empfangen von Signalen, so dass stets zunächst ein Senden und ein Empfangen mit der ersten Antennenanordnung und dann ein Senden und Empfangen mit der zweiten Antennenanordnung erfolgt, sodass entsprechend vollständige Signale aus dem ersten Radarerfassungsbereich zuerst und entsprechende Signale aus dem zweiten Radarerfassungsbereich hiernach, und dies in abwechselnder Weise, gewonnen werden.

Das Radarsensorsystem kann beispielsweise befähigt sein, die gewonnenen Daten selbst auszuwerten, beispielsweise mit dem Mikrocontroller. Alternativ oder zusätzlich kann auch vorgesehen sein, dass ein mit dem Mikrocontroller gekoppeltes Steuergerät, beispielsweise ein zentrales Steuergerät eines Kraftfahrzeugs, an welchem das Radarsensorsystem angeordnet ist, zur Auswertung der empfangenen Daten eingerichtet ist, und dass das zentrale Steuergerät zu diesem Zweck mit dem Mikrocontroller gekoppelt ist und die empfangenen Daten von dem Mikrocontroller übermittelt bekommt.

Die vorstehend dargelegten Erläuterungen sind insbesondere auf die Idee gerichtet, dass von einem mit der Umsetzung der Erfindung beauftragten Fachmann hardwaremäßig die erforderlichen Voraussetzungen geschaffen werden, nichtidentische Radarerfassungsbereiche abzudecken, wodurch der Vorteil erhalten wird, dass ein größerer Bereich überwacht wird, als es mit nur einem Radarsensor der Fall wäre. Ausgehend von dieser Konstellation wird durch die hardwaremäßige Vorsehung der entsprechenden Steueranordnung und deren Programmierung bewirkt, dass die Abdeckung des aus beiden Radarerfassungsbereichen sich ergebenden Gesamtraums in Ausführung einer alternierenden Ansteuerung der in dem Antennensystem enthaltenen Antennenanordnungen umgesetzt wird. Die erfindungsgemäße Herbeiführung der alternierenden Ansteuerung der Antennenanordnungen im Antennensystem bewirkt, dass der insgesamt für den Betrieb des Radarsensorsystems erforderliche Energiebedarf trotz des aufgrund mehrerer vorhandener Antennenanordnungen erweiterten Radarerfassungsbereichs insgesamt nicht viel höher ist, als er es bei einem Betrieb eines Radarsensors mit nur einer Antennenanordnung mit einem gewöhnlichen Radarerfassungsbereich wäre. Aufgrund der alternierenden Ansteuerung der Antennenanordnungen wird für die Erweiterung des von dem Radarsensorsystem abgedeckten Überwachungsbereichs mit einer Reduktion der Zeitauflösung erkauft; dieser Umstand ist allerdings in vielen Anwendungsszenarien nicht von hoher Relevanz.

In vielen Anwendungsszenarien ist die Überwachung eines größeren Radarerfassungsbereichs vorteilhaft, während eine maximierte Zeitauflösung, auf die durch die alternierende Überwachung in kleinem Umfang verzichtet werden würde, weniger erforderlich ist, beispielsweise in Fällen, in denen eine Hinderniserkennung bei geringen Geschwindigkeiten durchgeführt wird, die nicht im selben Maße eine Zeitauflösung erfordert wie es bei hohen relativen Geschwindigkeiten der Fall ist, so dass beispielsweise bei einer Überwachung auf ein Nähern eines Radfahrers seitlich einer Fahrzeugtür aufgrund der prinzipiell recht hohen Reichweite eines Radarsensors auch bei alternierender Überwachung eine ausreichende Zeitauflösung erhalten wird. Eine typische Alternierungsfrequenz kann beispielsweise bei maximal 20 Hz, bevorzugt zwischen 5 Hz und 20 Hz, besonders bevorzugt zwischen 10 Hz und 20 Hz eingestellt werden. Innerhalb dieser Frequenzbereiche wird der Vorteil erhalten, dass der Stromverbrauch vergleichsweise gering ist, ohne dass die grundsätzliche Funktionalität übermäßig beeinträchtigt wird.

Bevorzugt ist das Radarsensorsystem für einen Radarbetrieb mit Radarwellen im Millimeterbereich ausgelegt, besonders bevorzugt mit Wellenlängen der ausgesendeten Radarwellen zwischen 1 mm und 20 mm.

Bevorzugt ist das Radarsensorsystem für einen Radarbetrieb mit Radarwellen im Frequenzbereich zwischen 20 GHz und 100 GHz ausgelegt, besonders bevorzugt zwischen 77 GHz und 81 GHz.

In einer vorteilhaften Weiterbildung kann die Umsetzung der alternierenden Ansteuerung der ersten Antennenanordnung und der zweiten Antennenanordnung bewirkt werden dadurch, dass die erste Antennenanordnung und die zweite Antennenanordnung über einen Antennenumschalter, wie er dem Fachmann prinzipiell bekannt ist, miteinander sowie mit der Steueranordnung gekoppelt sind. Das Sende- und Empfangsschaltsystem weist eine Sende- und Empfangsschaltung für die Ansteuerung des Antennensystems auf, das heißt insbesondere: eine Sende- und Empfangsschaltung, welche für die Ansteuerung sowohl der ersten Antennenanordnung als auch der zweiten Antennenanordnung eingerichtet ist. Der Mikrocontroller ist mit dem Antennenumschalter gekoppelt und steuert diesen. Über eine Auslösung des Antennenumschalters durch Ansteuerung seitens des Mikrocontrollers wird herbeigeführt, dass die erste Antennenanordnung und die zweite Antennenanordnung von dem Antennenumschalter alternierend zum Senden und Empfangen von Radarsignalen angesteuert werden.

Vorteil von dieser Ausführungsform ist, dass aufgrund der Sende- und Empfangsschaltung, welche sowohl als die Sende- und Empfangsschaltung für die erste Antennenanordnung als auch als die Sende- und Empfangsschaltung für die zweite Antennenanordnung fungieren kann, sowie ferner mit prinzipiell nur einem erforderlichen Mikrocontroller, die Anzahl der erforderlichen Komponenten geringgehalten wird, wodurch ein Kostenvorteil gegenüber anderen möglichen Ausgestaltungen erreicht wird.

In einer alternativen vorteilhaften Weiterbildung weist das Sende- und Empfangsschaltsystem eine erste Sende- und Empfangsschaltung und eine zweite Sende- und Empfangsschaltung auf. Die erste Sende- und Empfangsschaltung ist mit der ersten Antennenanordnung gekoppelt und für das Ansteuern von der ersten Antennenanordnung verantwortlich. Die zweite Sende- und Empfangsschaltung ist mit der zweiten Antennenanordnung gekoppelt und für das Ansteuern der zweiten Antennenanordnung verantwortlich. Das Sende- und Empfangsschaltsystem ist mit dem Mikrocontroller gekoppelt. Der Mikrocontroller ist eingerichtet, die erste Sende- und Empfangsschaltung und die zweite Sende- und Empfangsschaltung zur alternierenden Ansteuerung der ersten Antennenanordnung und der zweiten Antennenanordnung anzusteuern. Gegenüber der vorherigen Ausführungsform ist diese Ausführungsform zwar dahingehend aufwendiger, dass zwei Sende- und Empfangsschaltungen erforderlich sind; im Gegensatz dazu ist jedoch insbesondere bei vorkonfektionierten Ausführungsformen der Vorteil vorhanden, dass Radarsensoren kommerziell erhältlicher Art mit wenigen Anpassungen für die Bereitstellung der Radarsensorsysteme angepasst werden können.

In einer anderen alternativen Weiterbildung ist vorgesehen, dass die Steueranordnung den Mikrocontroller als ersten Mikrocontroller und einen zweiten Mikrocontroller aufweist. Das Sende- und Empfangsschaltsystem weist eine erste Sende- und Empfangsschaltung für das Ansteuern der ersten Antennenanordnung sowie eine zweite Sende- und Empfangsschaltung für das Ansteuern der zweiten Antennenanordnung auf. Die erste Sende- und Empfangsschaltung ist mit dem ersten Mikrocontroller gekoppelt und die zweite Sende- und Empfangsschaltung ist mit dem zweiten Mikrocontroller gekoppelt. Der erste Mikrocontroller und der zweite Mikrocontroller sind eingerichtet, in der Ansteuerung der ersten Sende- und Empfangsschaltung zur Ansteuerung der ersten Antennenanordnung bzw. in der Ansteuerung der zweiten Sende- und Empfangsschaltung zur Ansteuerung der zweiten Antennenanordnung abzuwechseln. Der Vorteil dieser Ausführungsform ist, dass als fertiges Kaufpaket bereitgestellte Radarsensoren, welche beispielsweise als Sensor-on-Chip oder Sensor-on-Package sowohl Sende- und Empfangsschaltung als auch Mikrocontroller, in vielen Fällen auch die Sende- und Empfangsantennen der Antennenanordnung, als einheitliches System bereitstellen, ohne große Hardwareanpassungen oder sogar ohne jegliche Hardwareanpassungen und stattdessen ausschließlich durch Softwareanpassungen zu einem Radarsensorsystem der beschriebenen Art weitergebildet werden können. Um die ordnungsgemäße alternierende Ansteuerung zu gewährleisten, ist dabei bevorzugt vorgesehen, dass die Ansteuerung zeitlich gesteuert wird. Besonders bevorzugt ist für eine gut funktionierende zeitlich gesteuerte alternierende Ansteuerung eine Kopplung des ersten Mikrocontrollers mit dem zweiten Mikrocontroller vorgesehen, entweder unmittelbar durch eine Verbindung zwischen dem ersten Mikrocontroller oder dem zweiten Mikrocontroller oder mittelbar dahingehend, dass sowohl der erste Mikrocontroller als auch der zweite Mikrocontroller mit einem selben Zeitgeber verbunden sind.

Insgesamt hat jede der vorgeschlagenen Weiterbildungen den Vorteil, dass Daten von dem ersten Radarerfassungsbereich und Daten von dem zweiten Radarerfassungsbereich gewonnen werden, wobei durch die alternierende Ansteuerung der Energiebedarf nur vergleichsweise geringfügig höher ist als in einer Konstellation, in welcher der Erfassungsbereich lediglich eines Radarsensors, dann allerdings kontinuierlich, abgedeckt werden würde.

Bevorzugt ist, dass die erste Antenennanordnung und die erste Sende- und Empfangsschaltung für hochauflösende Radarsensorerfassung eingerichtet sind, und dass die zweite Antennenanordnung und die zweite Sende- und Empfangsschaltung für niederauflösende Radarsensoranordnung eingerichtet sind. Das kann insbesondere dahingehend ausgeführt sein, dass die erste Antennenanordnung und die erste Sende- und Empfangsschaltung eine höhere Auflösung quer zur Abstrahlrichtung aufweisen aufgrund von einer geeigneten Anzahl von Sende- und Empfangsantennen, die der Fachmann anwendungsadäquat auszuwählen befähigt ist, und dass die zweite Antennenanordnung und die zweite Sende- und Empfangsschaltung eine geringere Querauflösung aufweisen mit dem Vorteil, dass aufgrund der hierfür geringeren Anzahl erforderlicher Antennen ein Stromspareffekt erhalten wird, dabei jedoch die Sendereichweite der niederauflösenden Sende- und Empfangsschaltung größer ist, beispielsweise infolge entsprechend eingestellter Konfiguration des Senders, beispielsweise über die Einstellung der Sendeleistung. Diese Systematik hat den Vorteil, dass mit demselben Sensorsystem sowohl langreichweitige Daten und kurzreichweitige Daten, letztere mit höherer lateraler Auflösung, erhalten werden können. Die langreichweitigen Daten können dabei genutzt werden, um beispielsweise das Annähern eines Objekts von der Entfernung her zu erkennen, wohingegen die kurzreichweitige, höhere laterale Auflösung, von Vorteil ist, beispielsweise um die Art der Objekte erkennen zu können oder um eine Gestenerkennung zu ermöglichen.

Ein Gedanke der Erfindung sieht vor, dass das Radarsensorsystem als Bestandteil eines Radarsensorsystemmoduls angeboten wird, wobei das Radarsensorsystem der eingangsgenannten Art oder eine seiner Weiterbildungen vollständig auf einer einzigen Leiterplatte angeordnet ist und die Leiterplatte mit den entsprechenden Komponenten des Radarsensorsystems als einheitliches Modul angeboten wird. Der Begriff des Moduls bezieht sich in diesem Zusammenhang darauf, dass auf derselben Leiterplatte alle für die Funktionalität des Radarsensorsystems erforderlichen apparativen Einrichtungen vorhanden und in funktionsfähiger Weise miteinander verbunden sind. Die Leiterplatte weist eine mit dem Mikrocontroller des Radarsensorsystems gekoppelte Bestückungsfläche auf, wobei die Bestückungsfläche eingerichtet ist, einen digitalen Signalaufbereitungsprozessor aufzunehmen. Ein digitaler Signalaufbereitungsprozessor bestimmter Art ist frei am Markt verfügbar, so dass die Bestückungsfläche entsprechend zur Aufnahme von einem Signalaufbereitungsprozessor in Größe, Form und Anschlüssen vorbereitet ist. Mit der Bereitstellung eines solchen Moduls wird erreicht, dass ein Modul bereitgestellt wird, welches keinen digitalen Signalaufbereitungsprozessor aufweist, dieses jedoch bei Bedarf für eine Erweiterung der Rechenleistung des Radarsensorsystems vorbereitet ist. Es wird also ein flexibel nutzbares Modul bereitgestellt, wodurch sich aufgrund höherer Stückzahlen für die Herstellung potentielle Kostenvorteile ergeben.

Ein weiterer Gedanke der Erfindung betrifft ein Kraftfahrzeug, das ein erfindungsgemäßes Radarsensorsystem oder eine seiner Weiterbildungen aufweist. Das Radarsensorsystem ist bevorzugt
- in einer Fahrzeugtür, besonders bevorzugt in einem Türgriff, oder
- in einer Fahrzeugsäule, oder
- in einem Stoßfänger angeordnet ist.

Bevorzugt wird das oben beschriebene Radarsensorsystem, bei welchem die erste Antenennanordnung und die erste Sende- und Empfangsschaltung für hochauflösende Radarsensorerfassung eingerichtet sind und die zweite Antennenanordnung und die zweite Sende- und Empfangsschaltung für niederauflösende Radarsensoranordnung eingerichtet sind, in einem Kraftfahrzeug derart angeordnet, dass der erste Radarerfassungsbereich einen Bereich vor einer Fahrzeugtür abdeckt für eine Erfassbarkeit von Bediengesten und der zweite Radarerfassungsbereich einen gegenüber dem ersten Radarerfassungsbereich näher zu einer Vorwärtsfahrtrichtung gerichteten Bereich abdeckt für eine Erfassbarkeit von Hindernissen oder einen gegenüber dem ersten Radarerfassungsbereich näher zu einer Rückwärtsfahrtrichtung gerichteten Bereich abdeckt für eine Erfassbarkeit von Hindernissen. Anders ausgedrückt wird der Radarerfassungsbereich mit der höheren lateralen Auflösung näher in eine zur Fahrtrichtung senkrechten und zur Fahrtebene parallelen Richtung, also gegen die Türzugangsrichtung, entlang der ein Bediener sich einer Tür nähert, orientiert, als der Radarerfassungsbereich mit der geringeren lateralen Auflösung. Mit dieser Konstruktion wird der Vorteil erreicht, dass die Kollisionsgefahr, beispielsweise mit sich nähernden Radfahrern, reduziert wird, und gleichzeig, in einem Fall, dass eine Gestenerkennung benötigt wird, diese mit einer erforderlichen hohen lateralen Auflösung erhalten werden kann.

Weitere Einzelheiten, Merkmale und Vorteile der erfindungsgemäßen Radarsensoranordnung des erfindungsgemäßen Kraftfahrzeugs ergeben sich aus der nachfolgenden Beschreibung in Zusammenhang mit den Zeichnungen, in denen beispielshaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind. Es zeigen:
Fig. 1: Eine schematische Darstellung einer ersten Ausführungsform eines erfindungsgemäßen Radarsensorsystems;
Fig. 2: eine schematische Darstellung einer zweiten Ausführungsform eines erfindungsgemäßen Radarsensorsystems;
Fig. 3: eine schematische Darstellung einer dritten Ausführungsform eines erfindungsgemäßen Radarsensorsystems;
Fig. 4: eine schematische Darstellung eines Kraftfahrzeugs, enthaltend ein Radarsensorsystem der in Fig. 2 oder der in Fig. 3 abgebildeten Art.

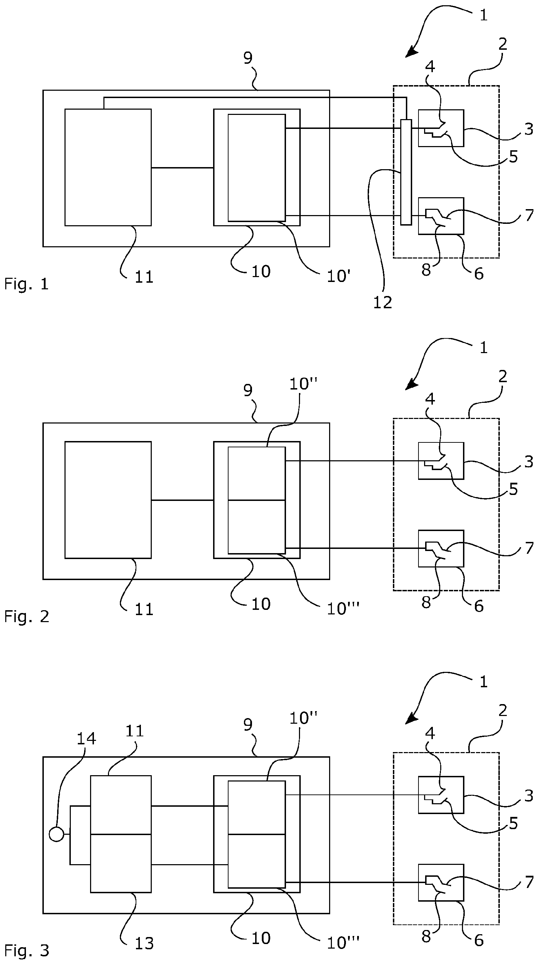

In Fig. 1 ist ein Radarsensorsystem 1 zur Erkennung von Objekten dargestellt. Es ist ein Antennensystem 2 vorhanden, das eine erste Antennenanordnung 3 mit einer ersten Sendeantenne 4 und einer ersten Empfangsantenne 5 aufweist, und es ist eine zweite Antennenanordnung 6 vorhanden, die eine zweiten Sendeantenne 7 und eine zweite Empfangsantenne 8 aufweist. Unter anderem dadurch, dass die Antennen 4, 5 der ersten Antennenanordnung 3 gegenüber den Antennen 7, 8 der zweiten Antennenanordnung verkippt sind und dadurch in definierter relativer Orientierung festgelegt sind, decken die beiden Antenennanordnungen unterschiedliche Radarerfassungsbereiche ab, die nicht oder nur partiell überlappen. Mit dem Antennensystem ist eine Steueranordnung 9 mit einem Sende- und Empfangsschaltsystem 10 und einem Mikrocontroller 11 gekoppelt. Die erste Antennenanordnung 3 und die zweite Antennenanordnung 6 sind über einen Antennenumschalter 12 miteinander und über den Mikrocontroller 11 mit der Steueranordnung 9 gekoppelt. Das Sende- und Empfangsschaltsystem 10 weist eine Sende- und Empfangsschaltung 10' für die Ansteuerung des Antennensystems 2 auf. Der Mikrocontroller 11 steuert den Antennenumschalters 12 an, und führt damit eine alternierende Ansteuerung der ersten Antennenanordnung 3 und der zweiten Antennenanordnung 6 herbei.

Das in Fig. 2 dargestellte Ausführungsbeispiel eines Radarsensorsystems 1 unterscheidet sich von dem in Fig. 1 dargestellten Ausführungsbeispiel insbesondere dadurch, dass das Sende- und Empfangsschaltsystem 10 eine erste Sende- und Empfangsschaltung 10" und eine zweite Sende- und Empfangsschaltung 10‴ aufweist, wobei die erste Sende- und Empfangsschaltung 10" mit der ersten Antennenanordnung 3 gekoppelt ist und die zweite Sende- und Empfangsschaltung 10‴ mit der zweiten Antennenanordnung 6 gekoppelt ist. Das Sende- und Empfangsschaltsystem 10 ist mit dem Mikrocontroller 11 gekoppelt, der wiederum eingerichtet ist, die erste Sende- und Empfangsschaltung 10" und die zweite Sende- und Empfangsschaltung 10‴ zur alternierenden Ansteuerung der ersten Antennenanordnung 3 und der zweiten Antennenanordnung 6 anzusteuern. Der in Fig. 1 dargestellte Antennenumschalter 12 ist in der in Fig. 2 dargestellten Ausführungsform nicht erforderlich, und aus diesem Grund nicht dargestellt.

Das in Fig. 3 dargestellte Ausführungsbeispiel eines Radarsensorsystems 1 unterscheidet sich von dem in Fig. 2 dargestellten Ausführungsbeispiel insbesondere dadurch, dass das, die Steueranordnung zwei Mikrocontroller 11, 13 aufweist, wobei das Sende- und Empfangsschaltsystem zwei Sende- und Empfangsschaltungen 10" und 10‴ aufweist. Die erste Sende- und Empfangsschaltung 10" ist mit dem ersten Mikrocontroller 11 gekoppelt und die zweite Sende- und Empfangsschaltung 10‴ ist mit dem zweiten Mikrocontroller 13 gekoppelt. Die zwei Mikrocontroller sind mit einem selben Zeitgeber 14 miteinander verbunden und dadurch mittelbar miteinander synchronisiert. Der erste Mikrocontroller 11 und der zweite Mikrocontroller 13 steuern jeweils die erste Sende- und Empfangsschaltung 3 beziehungsweise die zweite Sende- und Empfangsschaltung 6.

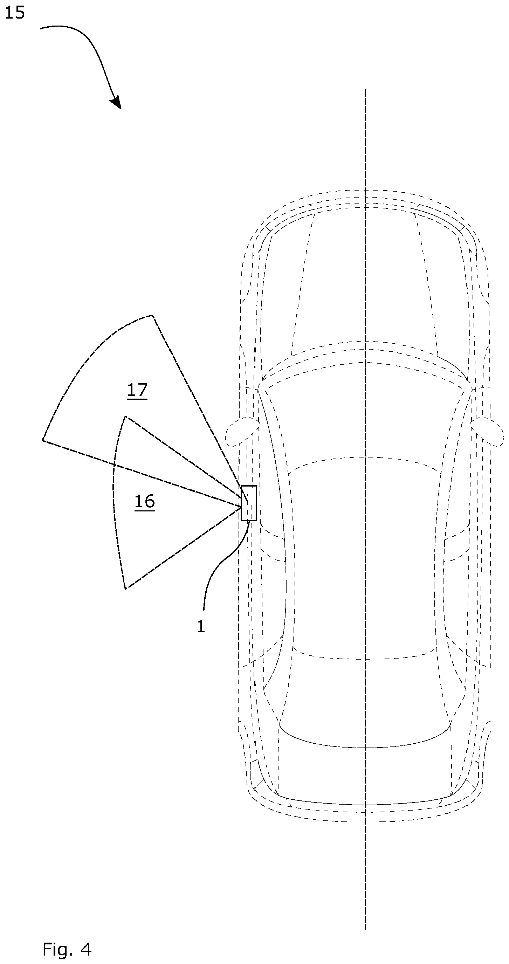

Fig. 4 zeigt ein Kraftfahrzeug 15 mit einem Radarsensorsystem 1, das in der Fahrertür angeordnet ist. Der erste Radarerfassungsbereich 16 deckt einen Bereich vor der Fahrzeugtür mit einer Antennencharakteristik mit senkrecht zur Fahrtrichtung weisendem Winkel ab, um eine Erfassbarkeit von Bediengesten zu bewerkstelligen. Der zweite Radarerfassungsbereich 17 ist zu einer Vorwärtsfahrtrichtung gerichtet. Er dient dazu, nahende Fahrräder oder sonstige Hindernisse erkennen zu können.

## Patentansprüche

1. Radarsensorsystem (1) zur Erkennung von Objekten, zumindest aufweisend:
ein Antennensystem (2), aufweisend
eine erste Antennenanordnung (3) mit mindestens einer ersten Sendeantenne (4) und mindestens einer ersten Empfangsantenne (5), wobei die erste Antennenanordnung (3) einen ersten Radarerfassungsbereich (16) abdeckt,
eine zweite Antennenanordnung (6) mit mindestens einer zweiten Sendeantenne (7) und mindestens einer zweiten Empfangsantenne (8), wobei die zweite Antennenanordnung (6) einen zweiten Radarerfassungsbereich (17) abdeckt,
eine mit dem Antennensystem (2) gekoppelte Steueranordnung (9) mit einem Sende- und Empfangsschaltsystem (10) und einem Mikrocontroller (11), wobei der Mikrocontroller (11) eingerichtet ist, eine alternierende Ansteuerung der ersten Antennenanordnung (3) und der zweiten Antennenanordnung (6) des Antennensystems (2) vorzunehmen.

2. Radarsensorsystem (1) nach Anspruch 1, **dadurch gekennzeichnet,**
**dass** die erste Antennenanordnung (3) und die zweite Antennenanordnung (6) über einen Antennenumschalter (12) miteinander und mit der Steueranordnung (9) gekoppelt sind, wobei das Sende- und Empfangsschaltsystem (10) eine Sende- und Empfangsschaltung (10`) für die Ansteuerung des Antennensystems (2) aufweist, und
**dass** der Mikrocontroller (11) mit dem Antennenumschalter (12) gekoppelt ist und über eine Auslösung des Antennenumschalters (12) die alternierende Ansteuerung der ersten Antennenanordnung (3) und der zweiten Antennenanordnung (6) vornimmt.

3. Radarsensorsystem (1) nach Anspruch 1, **dadurch gekennzeichnet,**
**dass** das Sende- und Empfangsschaltsystem (10) eine erste Sende- und Empfangsschaltung (10") und eine zweite Sende- und Empfangsschaltung (10‴) aufweist,
wobei die erste Sende- und Empfangsschaltung (10") mit der ersten Antennenanordnung (3) gekoppelt ist und die zweite Sende- und Empfangsschaltung (10‴) mit der zweiten Antennenanordnung (6) gekoppelt ist, wobei das Sende- und Empfangsschaltsystem (10) mit dem Mikrocontroller (11) gekoppelt ist und der Mikrocontroller (11) eingerichtet ist, die erste Sende- und Empfangsschaltung (10") und die zweite Sende- und Empfangsschaltung (10‴) zur alternierenden Ansteuerung der ersten Antennenanordnung (3) und der zweiten Antennenanordnung (6) anzusteuern.

4. Radarsensorsystem (1) nach Anspruch 1, **dadurch gekennzeichnet,**
**dass** die Steueranordnung (9) den Mikrocontroller (11) als ersten Mikrocontroller und einen zweiten Mikrocontroller (13) aufweist,
wobei das Sende- und Empfangsschaltsystem (10) eine erste Sende- und Empfangsschaltung (10") und eine zweite Sende- und Empfangsschaltung (10‴) aufweist, wobei die erste Sende- und Empfangsschaltung (10") mit dem ersten Mikrocontroller (11) gekoppelt ist und die zweite Sende- und Empfangsschaltung (10‴) mit dem zweiten Mikrocontroller (13) gekoppelt ist, wobei der erste Mikrocontroller (11) und der zweite Mikrocontroller (13), bevorzugt zeitlich gesteuert, in der Ansteuerung der ersten Sende- und Empfangsschaltung (10") zur Ansteuerung der ersten Antennenanordnung (3) beziehungsweise in der Ansteuerung der zweiten Sende- und Empfangsschaltung (10‴) zur Ansteuerung der zweiten Antennenanordnung (6) abwechseln.

5. Radarsensorsystem (1) nach Anspruch 3 oder nach Anspruch 4, **dadurch gekennzeichnet, dass** die erste Antennenanordnung (3) und die erste Sende- und Empfangsschaltung (10") für hochauflösende Radarsensorerfassung eingerichtet sind und die zweite Antennenanordnung (6) und die zweite Sende- und Empfangsschaltung (10‴) für niederauflösende Radarsensorerfassung eingerichtet sind.

6. Radarsensorsystem (1) nach einem der vorhergehenden Ansprüche, wobei die erste Antennenanordnung (3) und die zweite Antennenanordnung (6) bevorzugt in festgelegter Position zueinander positioniert sind, sodass der erste Radarerfassungsbereich (16) und der zweite Radarerfassungsbereich (17) nicht oder nur teilweise überlappen.

7. Radarsensorsystemmodul, aufweisend eine Leiterplatte, wobei ein Radarsensorsystem (1) nach einem der vorhergehenden Ansprüche auf der Leiterplatte angeordnet ist und mit dieser das Radarsensormodul bildet, wobei die Leiterplatte eine mit dem Mikrocontroller des Radarsensorsystems gekoppelte Bestückungsfläche aufweist zur Aufnahme eines digitalen Signalaufbereitungsprozessors für eine optionale Erweiterbarkeit der Rechenkapazitäten des Radarsensorsystems.

8. Kraftfahrzeug (15), aufweisend ein Radarsensorsystem (1) nach einem der vorhergehenden Ansprüche, wobei das Radarsensorsystem (1) bevorzugt
- in einer Fahrzeugtür, besonders bevorzugt in einem Türgriff, oder
- in einer Fahrzeugsäule, oder
- in einem Stoßfänger angeordnet ist.

9. Kraftfahrzeug (15), aufweisend ein Radarsensorsystem (1) nach Anspruch 5 oder nach Anspruch 6, wobei der erste Radarerfassungsbereich einen Bereich vor einer Fahrzeugtür abdeckt für eine Erfassbarkeit von Bediengesten und der zweite Radarerfassungsbereich einen gegenüber dem ersten Radarerfassungsbereich näher zu einer Vorwärtsfahrtrichtung gerichteten Bereich abdeckt für eine Erfassbarkeit von Hindernissen oder einen gegenüber dem ersten Radarerfassungsbereich näher zu einer Rückwärtsfahrtrichtung gerichteten Bereich abdeckt für eine Erfassbarkeit von Hindernissen.
